# EUROPEAN PATENT SPECIFICATION

(11) **EP 4 489 624 B1**
(45) Date of publication and mention of the grant of the patent: **18.06.2025**
(21) Application number: 23710685.1
(22) Date of filing: 07.03.2023
(51) Int. Cl.: A47J 31/36, A47J 31/06

(54) **BEVERAGE PREPARATION SYSTEM**
GETRÄNKEZUBEREITUNGSSYSTEM
SYSTÈME DE PRÉPARATION DE BOISSONS

(30) Priority: 07.03.2022 EP 22160591
(43) Date of publication of application: 15.01.2025
(73) Proprietor: Société des Produits Nestlé S.A., 1800 Vevey (CH)
(72) Inventor: TALON, Christian, 1134 Vufflens-le-Château (CH); BONACCI, Enzo, 1073 Savigny (CH); RICHI, Xavier, 1110 Morges (CH)
(74) Representative: Pasquino, Fabio
(86) International application number: PCT/EP2023/055777
(87) International publication number: WO 2023/170084

(56) References cited:
- US-A1- 2009 220 650
- US-A1- 2010 269 706
- US-A1- 2013 220 138
- US-A1- 2017 042 368
- US-A1- 2019 133 367
- US-A1- 2020 085 227
- US-A1- 2020 345 170

## Description

### Field of the invention

The present invention relates to a system for preparing a beverage from a capsule comprising a beverage ingredient, in particular the preparation of tea from tea leaves.

### Background of the invention

Single-serve beverage capsules are known in the art. These capsules are commonly used with beverage preparation machines for on demand dispensing of beverages, like coffee or tea.

For this, usually a beverage capsule with a capsule body that encloses a beverage ingredient is inserted in a capsule receiver of a beverage preparation machine. The capsule receiver is closed and the beverage preparation is started. In the capsule receiver, a top membrane of the capsule is punctured with a needle to inject a fluid, generally water, in the capsule to interact with the beverage ingredient inside the capsule to produce the desired beverage. The fluid fills the capsule so that the pressure inside the capsule increases. When a sufficient amount of fluid fills the capsule, a self-opening mechanism in the capsule is activated and opens a bottom membrane of the capsule to release the prepared beverage at a time when the extraction of the beverage component is completed. Examples of working principles of this type of container are described in WO 2003/059778 and in US2010269706A1.

This type of capsule requires that the fluid provided by the machine presents a high pressure, usually of about 14 bar to enable the opening of the bottom membrane. Such a high fluid pressure is adapted to the preparation of beverage from roast and ground coffee or soluble beverage ingredients like powder milk, soluble coffee, soluble tea or chocolate. But this high pressure is not adapted for the preparation of tea from tea leaves stored I the capsule
In order to prepare tea from tea leaves with such a system of machine and capsule, it has been proposed in WO 2005/018395 to adapt the self-opening mechanism so that the bottom membrane opens at a lower pressure, in particular by providing a specific design of the pyramid plate and the internal membrane. Yet, in practice, the resulting tea beverage was not fully acceptable quality because the principle of the self-opening mechanism of the capsule opening did still require the building of a certain pressure inside the capsule. In fact, it is well-known that optimal extraction of tea leaves happens at atmospheric pressure all along the tea extraction.

An object of the invention is to address the above existing problems and propose preparation of tea from a capsule comprising tea leaves within a beverage preparation machine such described in WO 2003/059778.

### Summary of the invention

The object is solved by the beverage preparation machine, the capsule holder and the system of Claims 1 to 10.

In the present application the terms "internal", "upper", "lateral", "front", "bottom" and "top" are used to describe the relational positioning of features of the invention. These terms should be understood to refer to the container in its normal orientation when positioned in a beverage preparation dispenser for the production of a beverage as shown in the figures.

### Brief description of the drawings

Specific embodiments of the invention are now described further, by way of example, with reference to the following drawings in which :
- Figure 1A is a view of a beverage machine according to the state of the art,
- Figure 1B is a schematic view of a capsule of the state of the art used in the machine of Figure 1A,
- Figures 2A and 2B are schematic views of the capsule holder in the receiving area of the machine of Figure 1 either in disconnected or in connected status,
- Figure 3 is a perspective view of the capsule holder according to the invention,
- Figures 4 is vertical cross section views of the capsule holder of Figure 3,
- Figure 5A is a perspective view of the body of a capsule usable in the system,
- Figure 5B is a perspective view of the front part of the capsule of Figure 5A
- Figure 5C corresponds to Figure 5B, the cover of the capsule being removed.
- Figures 6, 7 are vertical cross section views of the assembly of the liquid injection device of the machine and the capsule holder holding a capsule such as illustrated in Figures 5A-5C,
- Figures 8A, 8B illustrate the introduction and the removal of the capsule in and from the holder,
- Figure 9 is a vertical cross section view of an alternative capsule holder connected to the liquid injection device of the machine.

### Detailed description of exemplary embodiments

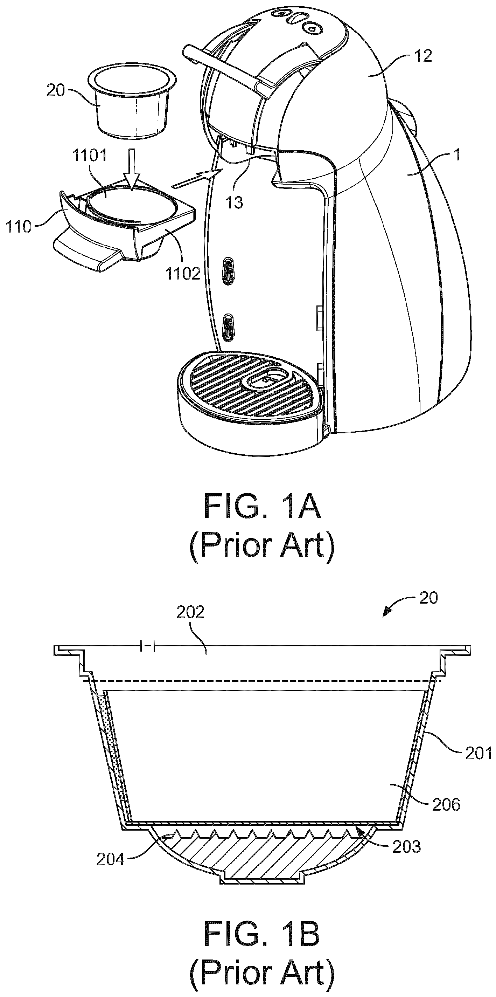

**Figures 1A and 1B** show a system of a beverage preparation machine 1 and a capsule 20 configured to prepare a beverage from said capsule according to the prior art. The machine 1 comprises a capsule holder 110 removeable from the machine configured to receive the capsule 20. The capsule holder comprises a receiving area 13 to introduce the body 201 of the capsule. Then the upper part 1102 of the capsule holder can be inserted in a receiving area 13 of the machine to prepare a beverage.

In this particular illustrated embodiment, the receiving area 13 of the machine and the upper part of the capsule holder are designed so that the lateral parts of the upper part 1102 are able to be slidably guided in the receiving area 13.

In addition, the machine comprises, above the receiving area 13 for the capsule holder, a liquid injection device 12 configured to be connected to the capsule holder and the capsule.

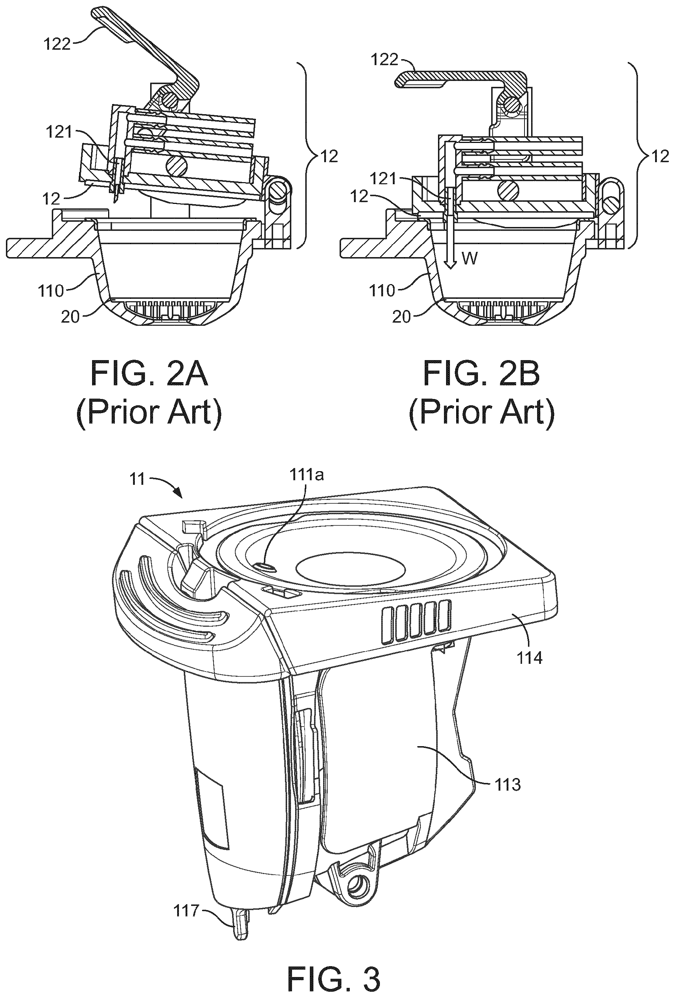

**Figures 2A and 2B** illustrate the capsule holder, the capsule and the liquid injection device 12 in two operations steps :
- in Figure 2A, the capsule holder is positioned in the receiving area 13 of the machine but it is not connected to the liquid injection device 12,
- in Figure 2B, the capsule holder is connected to the liquid injection device 12. In this operation, the actuating means 122 has been actuated so as to move the liquid injection device 12 to the inserted capsule holder and to simultaneously enclose the capsule in a brewing chamber formed by the liquid injection device and the capsule holder and to pierce the capsule top membrane 202 of the capsule.

This types of actuator can be such as described in WO 2008/107281 for example. The clamping means is configured to clamp the liquid injection device 12 against bearing edges of the capsule holder and/or edges of the capsule.

During this operation, the needle is oriented downwardly and the liquid is introduced downwardly as illustrated by the arrow W. A seal around the needle guarantees tightness with the membrane during liquid injection.

This system is particularly adapted to the preparation of a beverage under pressure due to the construction of the capsule as illustrated in Figure 1B comprising :
- a capsule body 201,
- a beverage ingredient 206 hold in a chamber ingredient defined between a top membrane 202 and a bottom membrane 203,
- an opening device 204 provided inside the body 201 of the capsule and below the bottom membrane 203 for opening this bottom membrane by relative engagement with this opening device under the effect of a rise in pressure of the injected liquid in the ingredient chamber. The machine 1 comprises a liquid supply system configured to provide the liquid injection device 12 with pressurised liquid. This liquid is usually water.

Usually, the liquid supply system can comprise :
- a liquid supply such as a liquid tank,
- pumping means to drive liquid form the liquid supply to the extraction device,
- heating and/or cooling means to adapt the temperature of the liquid before it is introduced inside the pod.

Generally, this liquid supply system is configured to provide the liquid injection device with pressurised liquid, preferably a liquid presenting a pressure above 10 bar.

Preferably, this beverage system of the prior art can correspond to the system described in WO 2003/059778 and the machine described WO 2008/107281.

In particular, this beverage system can correspond to the system commercialised by Nestlé under the trademark Nescafé Dolce Gusto.

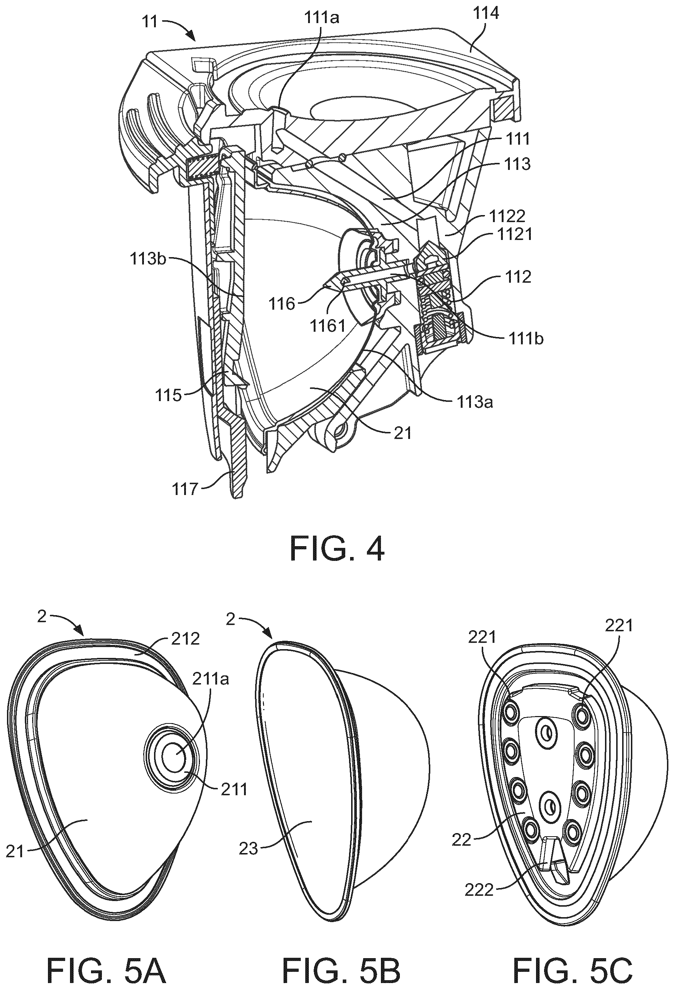

**Figures 3** **and** **4** illustrate a removable capsule holder 11 according to the invention that is different from the capsule holder of Figures 1A, 2A and 2B and that can be connected to the machine 1 and the liquid injection device 12 of Figure 2A, 2B in place of the capsule holder 110 of the state of the art.

In particular, this capsule holder 11 is designed to enclose a capsule 2 that is different from the capsule 20 of the prior art and that does not require the introduction of the liquid at high pressure inside the capsule during the beverage preparation. On the contrary, the beverage extraction is operated at ambient pressure inside the capsule 2. Such a pressure is particularly adapted to the preparation of tea from tea leaves as beverage ingredient.

This capsule holder 11 comprises an upper part 114 designed to cooperate with the capsule holder receiving area 13 of the machine 1. In the illustrated embodiment, the lateral parts 114a, 114b of said upper part present the same shape as the lateral parts of the capsule holder 110 of the prior art in order to be slidably guided in the receiving area 13 of the machine and to be able to be connected with the liquid injection device 12.

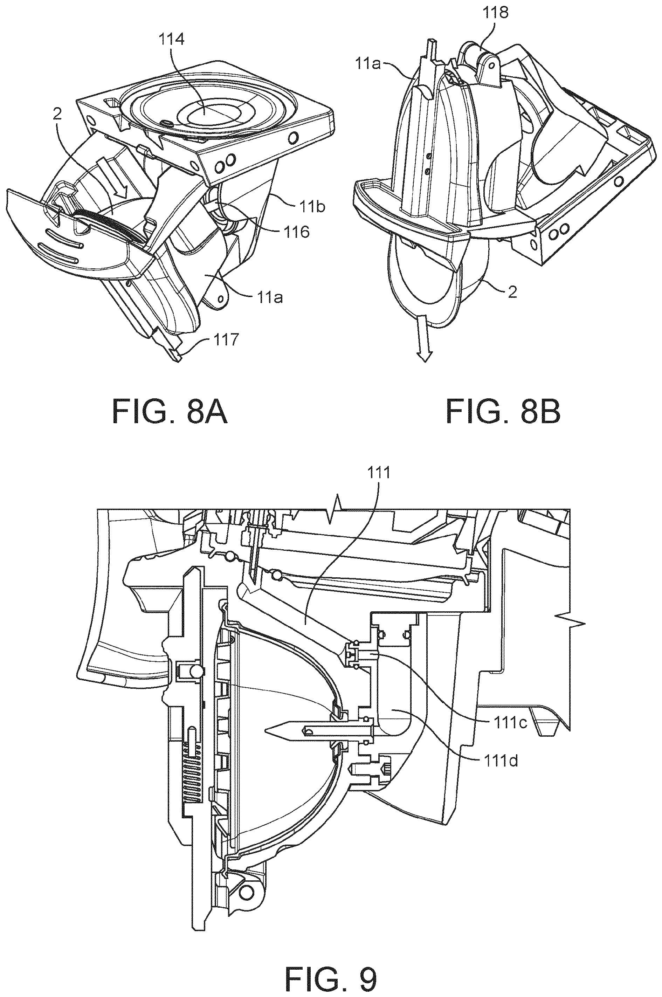

This capsule holder 11 comprises a chamber 113 for enclosing the capsule 2. This chamber is openable to introduce and remove the capsule (for example as illustrated in **Figures 8A, 8B****).**

The upper part 114 of the capsule holder comprises a top plate 1141 provided with a liquid input opening 111a and configured to cooperate with the liquid injection needle 121 of the machine. The capsule holder 11 comprises an internal conduit 111 designed to drive pressurised liquid injected by the liquid injection needle 121 in this liquid input opening 111a to the capsule 2 hold in the chamber 113. This conduit 111 comprises a liquid pressure reducing means 112. Accordingly, the pressure of the liquid supplied by the injection device can be decreased before the liquid is supplied in the capsule hold in the chamber and optimal extraction of the beverage ingredient, such as tea leaves, can be obtained.

Preferably, the liquid pressure reducing means 112 is designed to get a pressure close to atmospheric pressure inside the chamber.

Preferably, this liquid pressure reducing means 112 can be a pressure reducing valve 112 oriented in the conduit 111 so as to be opened by the flow of pressurised liquid. The valve member 1121 can be spring loaded against the valve seat 1122 so that the pressure of the pressurised liquid reaches the required atmospheric pressure in the chamber.

Alternatively, as illustrated in **Figure 9****,** the liquid pressure reducing means 112 can be provided by the shape of the conduit 11 that can comprise a decompression chamber 111d. This decompression chamber is designed as a buffer chamber inside the conduit 111. Preferably, a cross section reduction 111c is provided in the conduit upstream said chamber.

Preferably, the holder 11 comprises a liquid injection needle 116 to inject the low pressure liquid supplied at the downstream side of the internal conduit in the capsule 20 that is enclosed in the chamber and, if necessary, to pierce a wall of the capsule.

Generally, the capsule 20 encloses the beverage ingredient in a tight manner in order to preserve shelf life of the ingredient against humidity and gas. Before liquid is introduced inside the capsule, the capsule is opened to atmosphere in order to enable extraction at ambient atmosphere.

The capsule can be opened by the user, for example by removing at least one tab covering premade opening(s), and/or the capsule can be opened by piercing a beverage outlet and/or a liquid inlet inside the walls of the capsule.

Preferably, the capsule holder 11 comprises means to pierce the capsule 2 before the liquid supply system provides the liquid injection device 12 with pressurised liquid :
- the capsule holder can comprise a second piercing means 115 to pierce a beverage outlet in the capsule, and
- the capsule holder can comprise a first piercing means 116 to pierce a liquid inlet in the capsule.

These piercing means guarantee that the beverage preparation occurs at atmospheric pressure.

Generally, such piercing means pierce the capsule when the user introduces the capsule 2 inside the capsules holder and encloses the capsule in the chamber 113 of the holder.

In the illustrated embodiment, the first piercing means is a hollow needle 116. The upstream input end of said hollow needle is connected to the outlet end 111b of the conduit of the capsule holder.

When the capsule presents the configuration such as described in below Figures 5A-5C with an overflow wall oriented vertically during beverage preparation, then preferably, the downstream opening 1161 of the hollow needle is designed to orientate liquid downwards to the lowermost part of the capsule hold in the capsule holder as described in EP 2080454.

In addition, when the capsule presents the configuration such as described in below Figures 5A-5C with this overflow wall, the second piercing means 115 can be present a hook-like shape to shear the cover 23 of the capsule against the shearing member 222 of the capsule as described in WO 2010/146101.

In addition, the capsule holder 11 can comprise a beverage guiding outlet 117 to guide the beverage dispensed from the capsule outlet to a drinking cup.

**Figures 5A-5C** illustrate capsules that can be used with the capsule holder of the present invention

The capsule comprises a capsule body or housing 21 defining an internal volume for storing beverage ingredients. Figure 5A shows the back side of said body. In the present capsule, back side refers to the side where liquid is introduced in the capsule, whereas the front side refers to the side the beverage is dispensed from. At said back side, the body 21 presents a liquid inlet hole 211. This hole is configured for cooperating with and enabling the passage of the first piercing member 116 of the holder. Preferably this hole is closed by a membrane 211a. This membrane is made of a material pierceable by the needle. It is usually an aluminium membrane.

Figure 5B shows the front side of the body. At said front side, the housing is closed by a front cover 23. The cover 23 is attached to a rim extending from the front opened side of the housing. Preferably, at least a part of the cover is pierceable or tearable so that a beverage outlet can be created. The cover guarantees the freshness and the hygiene of beverage ingredient stored in the capsule.

Figure 5C corresponds to the capsule of Figure 5B wherein the cover 23 was removed. The capsule comprises a front wall 22 at the front face of the body. This front wall 22 comprises two beverage overflow holes 221. These overflow holes prevent the beverage from leaving the capsule too rapidly and before tea leaves have been sufficiently brewed.

The front wall 22 is usually positioned just under the front cover 23 of the capsule.

In a preferred mode, the front wall 22 can comprise a shearing member 222 on its front face, said shearing member being designed to tear the front cover 23 when the capsule is enclosed in the capsule holder further to the interaction of the shearing member with the second piercing means 115 of the holder. Accordingly, a beverage outlet can be made in the front cover 23 when the capsule is enclosed in the holder. Such a shearing member is described in WO 2010/146101.

In one particular embodiment, the capsule can comprise a filter to prevent tea leaves from leaving the capsule. This filter covers at least the overflow holes 221. In a particular embodiment, the filter can extend along the whole surface of the front wall according to the teaching of WO 2007/042414.

Accordingly, when the capsule comprises tea leaves, a tea beverage of optimised quality and deprived of tea leaves fines is produced.

A similar capsule devoid of front cover 23 or wherein the cover was removed by the user before introduction inside the holder can be used too.

The above capsules are particularly designed for the production of tea from tea leaves, yet other types of capsule requiring beverage preparation at low pressure, close to atmospheric pressure, can be used with the system of the holder and the beverage machine according to the invention.

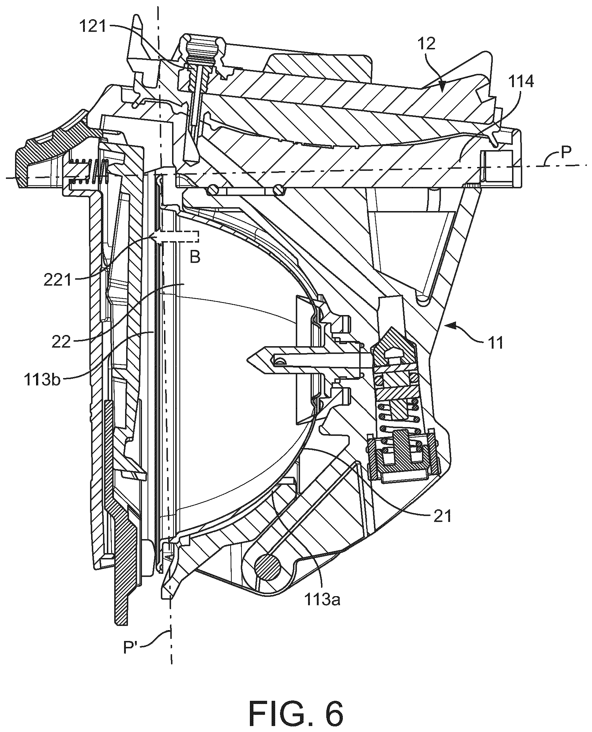

**Figure 6** illustrates the relative position of :
- a capsule comprising an overflow wall such as described in Figure 5A-5C inside the capsule holder according to the invention, and
- the liquid injection device 12 of the machine.

As illustrated in Figures 1A, 2A and 2B, the injection device 12 of the machine is provided with a liquid injection needle 121 that is oriented essentially vertically downwardly when the liquid injection device is connected to the capsule holder placed inside the machine.

The capsule holder 11 comprises :
- an upper part 114 extending essentially along a plane (P) in order
- a chamber 113 for enclosing the capsule 2, this capsule comprising a cup-shaped body 21 and a plane front overflow wall 22.

To enclose such a capsule, the chamber comprises a first part 113a that is cup shaped and a second part 113b that is essentially plane and extends along a plane P'.

In order to implement the overflow function of the front wall during the beverage preparation, the plane P' of the second part of the chamber is essentially perpendicular to the plane P of the upper part of the chamber when the chamber of the capsule holder is closed and the capsule holder is connected to the liquid injection device 12.

The correct orientation of the overflow holes 221 close to upper part 114 can be obtained by an asymmetric shape of the body 21 of the capsule and the corresponding conformal shape of the cup-shaped first part 113a of the chamber of the holder.

The internal shape of the holder guarantees the correct orientation of a capsule with overflow wall in this machine 1 that is not configured to receive such type of capsules and enables an optimal preparation of tea from tea leaves.

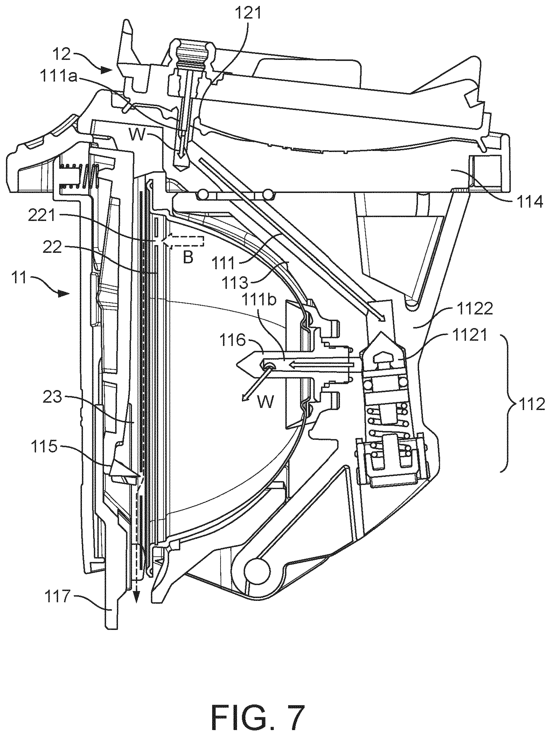

**Figure 7** is a vertical cross section views of the capsule holder of Figure 3 connected to the liquid injection device of the machine illustrating the path of liquid during beverage preparation when the capsule comprises an overflow wall 22 such as the capsule of Figures 5A-5C.

Liquid presenting a pressure above 10 bar is injected by the needle 121 of the liquid injection device of the machine inside the liquid input opening 111a of the capsule holder. Liquid follows the conduit 111 and pushes the pressure reducing valve 112 to enter the hollow needle 116 at a pressure close to atmospheric pressure. The hollow needle 116 is positioned inside the capsule 2 so that its end opening dispenses liquid inside the capsule downwardly. The liquid is directed to the bottom of the capsule where the beverage ingredients, preferably tea leaves, stand.

The flow of liquid is generally comprised between 150 and 180 ml/min. Liquid fills the capsule and produces the beverage, preferably tea, by contact with the beverage ingredient, preferably tea leaves. The beverage is able to flow through at least one opening 221 at the top of the overflow wall as illustrated by arrow B. This upper beverage outlet guarantees that tea leaves are sufficiently wetted and can sufficiently soak in the liquid before tea is dispensed from the capsule. A tea with improved quality is obtained.

Downstream the overflow opening 221, beverage is guided between the cover 23 and the wall 22 to the opening sheared in the cover by the piercing means 115 and then dispensed downwards out of the capsule holder along the guiding outlet 117 inside a drinking container positioned below.

As illustrated in Figure 7, preferably the pressure reducing valve 112 is positioned inside the conduit 111 as close as possible to the outlet end 111b of said conduit. This preferred position provides this valve 112 with an anti-backflow function and limits the volume of dead volume just upstream the outlet 111b which is critical when a beverage like tea from tea leaves is prepared from this capsule holder. In fact, any dead volume of fluid in a beverage preparation machine is disadvantageous due to safety and health issues. A dead volume can promote the development of bacteria, for example bacteria originating in and/or migrating into the dead volume from a used capsule, which has not yet been ejected or removed from the capsule holder.

Preferably, to limit even more the presence of dead volume, the pressure reducing valve 112 comprises a spring loaded valve member 1121 and the shape of this valve member is conformal to the shape of the valve seat 1122 designed by the conduit 111.

**Figures 8A, 8B** illustrate the introduction and the removal of the capsule in and from the holder 11 according to a particular embodiment. This capsule holder comprises two parts 11a, 11b movable one to the other between an opened position and a closed position.

These two parts are mobile or articulated in relation to the other between :
- an opened configuration where the capsule can be introduced or evacuated, and
- a closed configuration in which said two part lie reciprocally in abutment.

In the specific embodiment, the two parts are attached one to attached one to the other by a hinge 118, yet these two parts can be fully detachable one from the other in other alternatives. Figures 8A illustrate the opened position where the two parts are distant one from the other and the capsule 2 has just been introduced in a receiving area of the first part 11a. This receiving area is designed to orientate the capsule correctly inside the chamber defined by the holder, in particular with the overflow hole 221 positioned closer to the upper plate 114 than to the beverage outlet 117, when a capsule such as described in Fig.5A-5C is used.

Then the two parts 11a, 11b can be moved tone to the other to enclose the capsule 2 inside the holder, which form the capsule chamber. During the closure operation, the capsule, that is held in the first part 11a, is pierced by the needle 116 rising from the second part 11b. The cover of the capsule is simultaneously sheared to create the beverage outlet. The upper part 114 of the closed holder can be introduced inside the receiving area of the machine and the beverage can be prepared.

After the preparation, the holder can be removed from the receiving area of machine and the two parts can be distanced one from the other again to remove the capsule 2. As illustrated in Figure 8B, by orienting the receiving area of the first part upside down, the capsule can be directly thrown away in a bin.

Although the invention has been described with reference to the above illustrated embodiments, it will be appreciated that the invention as claimed is not limited in any way by these illustrated embodiments.

Variations and modifications may be made without departing from the scope of the invention as defined in the claims.

As used in this specification, the words "comprises", "comprising", and similar words, are not to be interpreted in an exclusive or exhaustive sense. In other words, they are intended to mean "including, but not limited to".

**List of references in the drawings :**

| | | | |
|---|---|---|---|
| machine | | | 1 |
| capsule holder | | | 11 |
| | conduit | | 111 |
| | liquid input opening | | 111a |
| | outlet | | 111b |
| | cross section reduction | | 111c |
| | decompression chamber | | 111d |
| | pressure reducing valve | | 112 |
| | | valve member | 1121 |
| | | valve seat | 1122 |
| | chamber | | 113 |
| | | cup shaped part | 113a |
| | | plane part | 113b |
| | upper part | | 114 |
| | | lateral parts | 114, 114b |
| | | top plate | 1141 |
| | second piercing means | | 115 |
| | hollow needle | | 116 |
| | | downstream opening | 1161 |
| | beverage guiding outlet | | 117 |
| | hinge | | 118 |
| liquid injection device | | | 12 |
| | needle | | 121 |
| actuating means capsule holder receiving area | | | 122 |
| | | | 13 |
| | cooperating means | | 131 |
| capsule | | | 2 |
| | capsule body | | 21 |
| | liquid inlet hole | | 211 |
| | membrane | | 211a |
| | rim | | 212 |
| | front opened side | | 213 |
| | front wall | | 22 |
| | overflow hole | | 221 |
| | shearing member | | 222 |
| | cover | | 23 |
| capsule prior art | | | 20 |
| capsule body | | | 201 |
| top membrane | | | 202 |
| bottom membrane | | | 203 |
| opening means | | | 204 |
| liquid distributor | | | 205 |
| beverage ingredient | | | 206 |
| outlet | | | 207 |
| capsule holder prior art | | | 110 |
| | receiving area | | 1101 |
| upper part | | | 1102 |

## Claims

1. System of a beverage preparation machine (1) and a beverage capsule (2),
said machine comprising :
- a removable capsule holder (11) configured for receiving and holding the capsule (2) and comprising an upper part, and
- a capsule holder receiving area (13) for receiving the upper part (114) of the removable capsule holder (11), and
- a liquid injection device (12) connectable to the capsule holder when said capsule holder is inserted in the receiving area, said liquid injection device comprising :
. a liquid injection needle (121), and
. actuating means (122) configured to move the capsule holder and the liquid injection device relatively one to the other to enable the introduction of the liquid in the capsule, and said liquid injection needle (122) being oriented vertically downwardly when said liquid injection device (12) is connected to the capsule holder,
and
- a liquid supply system configured to provide the liquid injection device with pressurised liquid, preferably a liquid presenting a pressure above 10 bar,
said capsule (2) comprising :
- a cup shaped body (21) containing one or more beverage ingredients, preferably tea leaves, said body presenting a front opened side (113), and
**characterized in that** said capsule (2) comprises:
- a plane front wall (22) extending at the front opened side, said front wall comprising at least one beverage overflow hole (221) close to the periphery of capsule body,
wherein the capsule holder (11) comprises a chamber (113) for enclosing the capsule (2), said chamber being openable to receive and remove the capsule, and
wherein the chamber (113) and the upper part (114) of the capsule holder (11) are designed so as :
- to orientate the front wall (22) of the capsule vertically, and
- to orientate the at least one beverage overflow hole (221) upwardly,
when the capsule holder (11) is inserted in the receiving area.

2. System according to the precedent claim, wherein :
- the upper part (114) of the capsule holder extends essentially along a plane (P), and
- the internal design of the chamber (113) of the capsule holder is conformal to the external shape of the body (21) of the capsule, said chamber comprising two parts, the first part (113a) being cup shaped and the second part being essentially plane (113b), and
- when the chamber is closed, the second plane part (113b) of the chamber extends along the front wall (22) of the capsule and is essentially perpendicular to the upper part of capsule the holder (114).

3. System according to Claim 1 or 2, wherein the removable capsule holder (11) comprises:
- a liquid input opening (111a) in the upper part (114) of said holder configured to cooperate with the liquid injection needle (121), and
- a conduit (111) designed to drive pressurised liquid injected by the liquid injection needle (121) to the capsule (2) hold in the chamber (113).

4. System according to any one of the preceding claims, wherein the capsule holder (11) comprises:
- a first piercing means (116) to pierce a liquid inlet in the capsule, and
- a second piercing means (115) to pierce a beverage outlet in the capsule.

5. System according to the preceding claim, wherein the first piercing means (116) is a hollow needle, wherein the upstream input end of said hollow needle is connected to the outlet end (111b) of the conduit of the capsule holder.

6. System according to the preceding claim, wherein the downstream opening of the hollow needle is designed to orientate liquid downwards to the lowermost part of the capsule (2) hold in the capsule holder.

7. Use of a capsule comprising :
- a capsule body (21) containing one or more beverage ingredients, preferably tea leaves, said body presenting a front opened side (113), and
- a front wall (22) extending at the front opened side, said front wall comprising at least one beverage overflow hole (221) close to the periphery of capsule body,
in a system according to any one of Claim 1 to 6.

8. Capsule holder for use in a system according to any one of Claims 1 to 6, wherein said capsule holder (11) comprises :
- an upper part (114) extending essentially along a plane (P), and
**characterized in that** said capsule holder (11) comprises:
- a chamber (113) for enclosing the capsule (2), said chamber being openable to receive and remove the capsule, and
wherein the chamber comprises two parts, the first part (113a) being cup shaped and the second part being essentially plane (113b), and
wherein the plane (P') of the second part of the chamber is essentially perpendicular to the plane (P) of the upper part when the chamber closed.

9. Capsule holder according to the precedent claim, wherein said holder (11) comprises :
- a liquid input opening (111a) in the upper part (114) of said holder, and
- a liquid output opening (111b) in the chamber (113), and
- an internal conduit (111) extending from said liquid input opening (111a) to said liquid output opening (111b).

10. Capsule holder according to the precedent claim, wherein said conduit (111) comprises a liquid pressure reducing means, such as a pressure reducing valve (112) or a decompression chamber (111d).

## Patentansprüche

1. System aus einer Getränkezubereitungsmaschine (1) und einer Getränkekapsel (2),
die Maschine umfassend:
- einen entfernbaren Kapselhalter (11), der zum Aufnehmen und Halten der Kapsel (2) konfiguriert ist und einen oberen Teil umfasst, und
- einen Kapselhalteraufnahmebereich (13) zum Aufnehmen des oberen Teils (114) des abnehmbaren Kapselhalters (11), und
- eine Flüssigkeitseinspritzvorrichtung (12), die mit dem Kapselhalter verbindbar ist, wenn der Kapselhalter in den Aufnahmebereich eingesetzt ist, die Flüssigkeitseinspritzvorrichtung umfassend:
. eine Flüssigkeitseinspritznadel (121), und
. Betätigungsmittel (122), die konfiguriert sind, um den Kapselhalter und die Flüssigkeitseinspritzvorrichtung relativ zueinander zu bewegen, um die Einleitung der Flüssigkeit in die Kapsel zu ermöglichen, und die Flüssigkeitseinspritznadel (122) vertikal nach unten ausgerichtet ist, wenn die Flüssigkeitseinspritzvorrichtung (12) mit dem Kapselhalter verbunden ist, und
- ein Flüssigkeitsversorgungssystem, das konfiguriert ist, um der Flüssigkeitseinspritzvorrichtung unter Druck stehende Flüssigkeit bereitzustellen, vorzugsweise eine Flüssigkeit, die einen Druck über 10 bar vorweist,
die Kapsel (2) umfassend:
- einen becherförmigen Körper (21), der eine oder mehrere Getränkezutaten enthält, vorzugsweise Teeblätter, wobei der Körper eine offene Vorderseite (113) vorweist, und
**dadurch gekennzeichnet, dass** die Kapsel (2) umfasst:
- eine ebene Vorderwand (22), die sich an der offenen Vorderseite erstreckt, die Vorderwand umfassend mindestens ein Getränkeüberlaufloch (221) nahe dem Umfang des Kapselkörpers,
wobei der Kapselhalter (11) eine Kammer (113) zum Umschließen der Kapsel (2) umfasst, wobei die Kammer öffenbar ist, um die Kapsel aufzunehmen und zu entfernen, und
wobei die Kammer (113) und der obere Teil (114) des Kapselhalters (11) gestaltet sind, um:
- die Vorderwand (22) der Kapsel vertikal auszurichten, und
- das mindestens eine Getränkeüberlaufloch (221) nach oben auszurichten, wenn der Kapselhalter (11) in den Aufnahmebereich eingesetzt ist.

2. System nach dem vorstehenden Anspruch, wobei:
- sich der obere Teil (114) des Kapselhalters im Wesentlichen entlang einer Ebene (P) erstreckt, und
- die innere Gestaltung der Kammer (113) des Kapselhalters der äußeren Form des Kapselkörpers (21) entspricht, die Kammer umfassend zwei Teile, wobei der erste Teil (113a) becherförmig ist und der zweite Teil im Wesentlichen eben (113b) ist, und
- wenn die Kammer geschlossen ist, sich der zweite ebene Teil (113b) der Kammer entlang der Vorderwand (22) der Kapsel erstreckt und im Wesentlichen senkrecht zu dem oberen Teil des Kapselhalters (114) ist.

3. System nach Anspruch 1 oder 2, wobei der entfernbare Kapselhalter (11) umfasst:
- eine Flüssigkeitszufuhröffnung (111a) in dem oberen Teil (114) des Halters, die konfiguriert ist, um mit der Flüssigkeitseinspritznadel (121) zusammenzuwirken, und
- eine Leitung (111), die gestaltet ist, um unter Druck stehende Flüssigkeit, die durch die Flüssigkeitseinspritznadel (121) eingespritzt wird, zu der Kapsel (2) zu leiten, die in der Kammer (113) gehalten wird.

4. System nach einem der vorstehenden Ansprüche, wobei der Kapselhalter (11) umfasst:
- ein erstes Durchstechmittel (116), um einen Flüssigkeitseinlass in der Kapsel zu durchstechen, und
- ein zweites Durchstechmittel (115), um einen Getränkeauslass in der Kapsel zu durchstechen.

5. System nach dem vorstehenden Anspruch, wobei das erste Durchstechmittel (116) eine Hohlnadel ist, wobei das stromaufwärtige Zufuhrende der Hohlnadel mit dem Ausgangsende (111b) der Leitung des Kapselhalters verbunden ist.

6. System nach dem vorstehenden Anspruch, wobei die stromabwärtige Öffnung der Hohlnadel gestaltet ist, um Flüssigkeit nach unten zu dem untersten Teil der Kapsel (2) auszurichten, die in dem Kapselhalter gehalten wird.

7. Verwendung einer Kapsel, umfassend:
- einen Körper (21), der eine oder mehrere Getränkezutaten enthält, vorzugsweise Teeblätter, wobei der Körper eine offene Vorderseite (113) vorweist, und
- eine Vorderwand (22), die sich an der offenen Vorderseite erstreckt, die Vorderwand umfassend mindestens ein Getränkeüberlaufloch (221) nahe dem Umfang des Kapselkörpers,
in einem System nach einem der Ansprüche 1 bis 6.

8. Kapselhalter zur Verwendung in einem System nach einem der Ansprüche 1 bis 6, wobei der Kapselhalter (11) umfasst:
- einen oberen Teil (114), der sich im Wesentlichen entlang einer Ebene (P) erstreckt, und
**dadurch gekennzeichnet, dass** der Kapselhalter (11) umfasst:
- eine Kammer (113) zum Umschließen der Kapsel (2), wobei die Kammer öffenbar ist, um die Kapsel aufzunehmen und zu entfernen, und
wobei die Kammer zwei Teile umfasst, wobei der erste Teil (113a) becherförmig ist und der zweite Teil im Wesentlichen eben (113b) ist, und
wobei die Ebene (P') des zweiten Teils der Kammer im Wesentlichen senkrecht zu der Ebene (P) des oberen Teils ist, wenn die Kammer geschlossen ist.

9. Kapselhalter nach dem vorstehenden Anspruch, wobei der Halter (11) umfasst:
- eine Flüssigkeitszufuhröffnung (111a) in dem oberen Teil (114) des Halters, und
- eine Flüssigkeitsausgabeöffnung (111b) in der Kammer (113), und
- eine innere Leitung (111), die sich von der Flüssigkeitszufuhröffnung (111a) zu der Flüssigkeitsausgabeöffnung (111b) erstreckt.

10. Kapselhalter nach dem vorstehenden Anspruch, wobei die Leitung (111) ein Flüssigkeitsdruckreduziermittel wie ein Druckreduzierventil (112) oder eine Dekompressionskammer (111d) umfasst.

## Revendications

1. Système d'une machine de préparation de boissons (1) et d'une capsule de boisson (2),
ladite machine comprenant :
- un support de capsule amovible (11) conçu pour recevoir et supporter la capsule (2) et comprenant une partie supérieure, et
- une zone de réception de support de capsule (13) pour recevoir la partie supérieure (114) du support de capsule amovible (11), et
- un dispositif d'injection de liquide (12) pouvant être relié au support de capsule, lorsque ledit support de capsule est inséré dans la zone de réception, ledit dispositif d'injection de liquide comprenant :
. une aiguille d'injection de liquide (121), et
. un moyen d'actionnement (122) conçu pour déplacer le support de capsule et le dispositif d'injection de liquide relativement l'un à l'autre afin de permettre l'introduction du liquide dans la capsule, et ladite aiguille d'injection de liquide (122) étant orientée verticalement vers le bas, lorsque ledit dispositif d'injection de liquide (12) est relié au support de capsule, et
- un système d'alimentation en liquide conçu pour fournir, au dispositif d'injection de liquide, un liquide sous pression, de préférence, un liquide présentant une pression supérieure à 10 bar,
ladite capsule (2) comprenant :
- un corps en forme de coupelle (21) contenant un ou plusieurs ingrédients de boisson, de préférence, des feuilles de thé, ledit corps présentant un côté ouvert à l'avant (113), et
**caractérisé en ce que** ladite capsule (2) comprend :
- une paroi frontale plane (22) s'étendant sur le côté ouvert avant, ladite paroi frontale comprenant au moins un orifice de débordement de boisson (221) à proximité de la périphérie du corps de capsule,
dans lequel le support de capsule (11) comprend une chambre (113) pour contenir la capsule (2), ladite chambre pouvant être ouverte pour recevoir et retirer la capsule, et
dans lequel la chambre (113) et la partie supérieure (114) du support de capsule (11) sont destinées à :
- orienter verticalement la paroi avant (22) de la capsule, et
- orienter vers le haut l'au moins un orifice de débordement de boisson (221), lorsque le support de capsule (11) est inséré dans la zone de réception.

2. Système selon la revendication précédente, dans lequel :
- la partie supérieure (114) du support de capsule s'étend essentiellement le long d'un plan (P), et
- la conception interne de la chambre (113) du support de capsule est conforme à la forme externe du corps (21) de la capsule, ladite chambre comprenant deux parties, la première partie (113a) étant en forme de coupelle et la seconde partie étant essentiellement plane (113b), et
- lorsque la chambre est fermée, la seconde partie plane (113b) de la chambre s'étend le long de la paroi avant (22) de la capsule et est essentiellement perpendiculaire à la partie supérieure (114) du support de capsule.

3. Système selon la revendication 1 ou 2, dans lequel le support de capsule amovible (11) comprend :
- une ouverture d'entrée de liquide (111a) dans la partie supérieure (114) dudit support conçue pour coopérer avec l'aiguille d'injection de liquide (121), et
- un conduit (111) destiné à entraîner le liquide sous pression injecté par l'aiguille d'injection de liquide (121) jusqu'à la capsule (2) supportée dans la chambre (113).

4. Système selon l'une quelconque des revendications précédentes, dans lequel le support de capsule (11) comprend :
- un premier moyen de perçage (116) pour percer une entrée de liquide dans la capsule, et
- un second moyen de perçage (115) pour percer une sortie de boisson dans la capsule.

5. Système selon la revendication précédente, dans lequel le premier moyen de perçage (116) est une aiguille creuse, dans lequel l'extrémité d'entrée en amont de ladite aiguille creuse est reliée à l'extrémité de sortie (111b) du conduit du support de capsule.

6. Système selon la revendication précédente, dans lequel l'ouverture en aval de l'aiguille creuse est destinée à orienter le liquide vers le bas, vers la partie la plus basse de la capsule (2) supportée dans le support de capsule.

7. Utilisation d'une capsule comprenant :
- un corps de capsule (21) contenant un ou plusieurs ingrédients de boisson, de préférence, des feuilles de thé, ledit corps présentant une face avant ouverte (113), et
- une paroi frontale (22) s'étendant sur le côté ouvert avant, ladite paroi frontale comprenant au moins un orifice de débordement de boisson (221) proche de la périphérie du corps de capsule,
dans un système selon l'une quelconque des revendications 1 à 6.

8. Support de capsule pour utilisation dans un système selon l'une quelconque des revendications 1 à 6, dans lequel ledit support de capsule (11) comprend :
- une partie supérieure (114) s'étendant essentiellement le long d'un plan (P), et
**caractérisé en ce que** ledit support de capsule (11) comprend :
- une chambre (113) pour contenir la capsule (2), ladite chambre pouvant être ouverte pour recevoir et retirer la capsule, et
dans lequel la chambre comprend deux parties, la première partie (113a) étant en forme de coupelle et la seconde partie étant essentiellement plane (113b), et
dans lequel le plan (P') de la seconde partie de la chambre est essentiellement perpendiculaire au plan (P) de la partie supérieure, lorsque la chambre est fermée.

9. Support de capsule selon la revendication précédente, dans lequel ledit support (11) comprend :
- une ouverture d'entrée de liquide (111a) dans la partie supérieure (114) dudit support, et
- une ouverture de sortie de liquide (111b) dans la chambre (113), et
- un conduit interne (111) s'étendant de ladite ouverture d'entrée de liquide (111a) à ladite ouverture de sortie de liquide (111b).

10. Support de capsule selon la revendication précédente, dans lequel ledit conduit (111) comprend un moyen de réduction de pression de liquide, tel qu'une soupape de réduction de pression (112) ou une chambre de décompression (111d).
